# EUROPÄISCHE PATENTSCHRIFT

(11) **EP 0 667 931 B1**
(45) Veröffentlichungstag und Bekanntmachung des Hinweises auf die Patenterteilung: **25.09.1996**
(21) Anmeldenummer: 93909376.1
(22) Anmeldetag: 29.04.1993
(51) Int. Cl.: E21D 15/51, F16J 10/04

(54) **KOLBEN-ZYLINDER-EINHEIT UND VERFAHREN ZU DEREN HERSTELLUNG**
PISTON-CYLINDER UNIT AND PROCESS FOR MAKING IT
PROCEDE DE FABRICATION D'UNE UNITE PISTON-CYLINDRE ET UNITE PISTON-CYLINDRE REALISEE SELON LEDIT PROCEDE

(30) Priorität: 10.11.1992 US 974270
(43) Veröffentlichungstag der Anmeldung: 23.08.1995
(73) Patentinhaber: HEILIGER, Robert, Wilhelm, D-52372 Kreuzau (DE)
(72) Erfinder: HEILIGER, Robert, Wilhelm, D-52372 Kreuzau (DE)
(74) Vertreter: Aubele, Karl B.
(86) Internationale Anmeldenummer: EP9301026
(87) Internationale Veröffentlichungsnummer: WO9411612

(56) Entgegenhaltungen:
- DD-A- 227 765
- DE-A- 4 015 084
- DE-U- 8 808 519
- FR-A- 1 202 536
- GB-A- 893 050

## Beschreibung

Die Erfindung betrifft ein Verfahren zur Herstellung einer Kolben Zylinder-Einheit mit mindestens einer zylindrischen Innenfläche und mindestens einem in der zylindrischen Innenfläche gleitend geführten Kolben, wobei an mindestens einer zylindrischen Oberfläche ein Dichtring angelegt wird und Dichtring und Oberfläche relativ zueinander verschiebbar angeordnet werden und wobei die Enden jeder Zylinderinnenfläche mit mechanischen Mitteln abgedichtet werden.

Mit der französischen Veröffentlichung Nr. 1.202.536 ist ein hydraulisch betätigter Grubenstempel bekannt geworden, bei dem bereits eine Kunststoffbeschichtung für die innere Zylinderfläche und die äußere Fläche des verschiebbaren Innenteils vorgeschlagen wird. Hierbei können nach dieser Veröffentlichung sowohl Thermoplaste als auch Duroplaste Anwendung finden. Die aufgetragene Kunststoffschicht soll eine Schichtdicke von mindestens 1 mm und maximal 4 mm aufweisen. Als eine Möglichkeit der Aufbringung der Kunststoffschicht wird vorgeschlagen diese durch Spritzen aufzubringen. Da gleichzeitig nach dieser Veröffentlichung ein Erhitzen vermieden werden soll, muß es sich damit für den Fall der Verwendung von Duroplasten um in Lösungsmittel gelöste Duroplaste handeln. Als weitere Möglichkeit der Aufbringung der Kunststoffschicht mindestens für den äußeren Zylinder wird vorgeschlagen, diese Kunststoffschicht in Form einer Kunststoffhülse oder Kunststoffbüchse einzutreiben. Nach Einbringung der Kunststoffschicht sollen die inneren zylindrischen Kunststoffflächen nachträglich kalibriert werden, um die gewünschte Form- und Maßgenauigkeit zu erreichen. Als weiterer Vorteil wird noch angegeben, daß die Kunststoffschicht auch auf unbearbeitete Oberflächen aufgebracht werden kann.

Ein Grubenstempel in der Ausbildung nach dieser Veröffentlichung weist erhebliche Nachteile auf. Verwendet man nämlich thermoplastische Kunststoffe zur Beschichtung, so muß man in Kauf nehmen, daß diese relativ gut durchlässig für Sauerstoff und Wasserdampf sind, so daß diese Stoffe aus dem Druckmedium, besonders wenn dieses Wasser ist, sehr bald durch die Kunststoffschicht hindurchdiffundieren und in der Grenzschicht zwischen Kunststoff und Metall am Metall zur Korrosion oder aber zu Wasserablagerungen führen, wodurch die Beschichtung vom Metall abgelöst wird. Ein Betrieb eines solchen Hydraulikzylinders unter Betriebsdruck ist dann nicht mehr möglich, weil durch die Kolbenbewegung im Inneren die in der Grenzschicht befindliche Wasserablagerung in Hubrichtung vorangetrieben und den gesamten Kunststoff abschälen würde. Da ja darüber hinaus bei größeren Ansammlungen die Wasserablagerungen am Kolben vorbeigetrieben würden und damit hinter dem Kolben im Niedrigdruckbereich ankommen würde, würde eine solche dort ankommende Wasserblase im Niedrigdruckbereich explodieren und den Kunststoffbelag zerfetzen. Darüber hinaus aber ist eine Kunststoffschicht von 1 mm Dicke oder mehr sowohl bei Thermoplasten als auch bei Duroplasten bei Verwendung von Hochdruck zu elastisch. Die Kunststoffschicht würde durch den hohen Druck radial komprimiert in einer Größenordnung, die die Dichtelemente des Kolbens nicht mitmachen könnte, so daß der Zylinder bei Hochdruckanwendung sofort undicht würde.

Verwendet man nicht Thermoplaste, sondern Duroplaste und trägt diese, wie dies der französischen Veröffentlichung zu entnehmen ist, in flüssiger Form mit Hilfe eines Lösungsmittels auf und vermeidet Wärmezufuhr, wie dies dort ebenfalls angegeben ist, so kann der Abschluß der Vernetzung und die damit einhergehende vollständige Verdampfung des Lösungsmittels bis zu mehreren Monaten in Anspruch nehmen, so daß die auf solche Art hergestellten Hydraulikzylinder zunächst mehrere Monate gelagert werden müßten, ehe sie einsatzfähig wären. Bei dieser Art der Vernetzung ist der Vernetzungsgrad darüber hinaus niedriger, so daß die Hafteigenschaften und die Festigkeitseigenschaften des Duroplastes für einen Einsatz am hydraulischen Grubenstempel unbefriedigend wäre. Würde man aber die flüssig aufgetragenen Duroplaste durch Wärmezufuhr vernetzen, so müßten in kürzester Zeit große Ströme an Lösungsmittelgasen umweltverträglich bewältigt werden. Darüber hinaus ist die Aufbringung einer Schicht von bis zu 4 mm eines zunächst noch gelösten und damit flüssigen Kunststoffes außerordentlich schwierig. Der hierfür erforderliche technische Aufwand würde eine Fertigung völlig unrentabel werden lassen. Die in jedem Fall bei einer solch dicken Kunststoffschicht notwendige nachträgliche Kalibrierung ist darüber hinaus ein zusätzlicher unerwünschter Arbeitsprozeß.

Die Aufbringung der Kunststoffummantellung in der Form einer in den Außenzylinder eingetriebenen Hülse, wie dies ebenfalls nach der französischen Veröffentlichung noch vorgeschlagen wird, ist ebenfalls nachteilig, weil auch in einem solchen Fall die beschriebenen großen Elastizitätsnachteile sich in Form von Undichtigkeiten bemerkbar machen würden und weil außerdem das Druckmedium als Folge von Diffusion alsbald in die Grenzschicht zwischen Kunststoff und Metall eindringen würde und damit die Kunststoffhülse verformen würde.

In allen Fällen aber ist zu beachten, daß auch bei einer solchen dicken Wandstärke selbst dann, wenn die Kolbendichtungen die Radialbewegung aufgrund der Kompression durch das Druckmittel mitmachen würden eine solche Radialverformung ja nur im Druckraum stattfindet. Sie tritt nicht auf im Bereich hinter dem Kolben, weil dort der Zylinderraum ja drucklos ist. Dies bedeutet, daß im Bereich der Dichtelemente des Kolbens eine Radialstufe in der Kunststoffbeschichtung entsteht, die bei einer Bewegung des Kolbens dafür sorgt, daß die Kunststoffbeschichtung abreißt. Der mit der genannten französischen Veröffentlichung vorgeschlagene kunststoffbeschichtete hydraulische Grubenstempel ist damit nicht einsatzfähig. Außerdem werden die auf der glatten Kunststoffoberfläche gleitenden Dichtelemente des Kolbens rasch abgerieben, weil dort kein Schmiermittel haftet.

Mit der GB-A-893,050 ist ein an der inneren Zylinderfläche mit Kunststoff beschichteter, hydraulisch betätigter Gurubenstempel bekannt geworden, wobei die Kunststoffbeschichtung die Verwendung von Wasser als Druckmittel ermöglichen soll. Es wird ohne Präferenz sowohl die Verwendung von Duroplasten wie auch Thermoplasten vorgeschlagen (siehe Seite 3, Zeilen 51-82). Die Duroplaste sollen gelöst und in gelöster Form aufgetragen werden, während die Thermoplaste als Pulver aufgetragen werden sollen. Es gilt daher das bereits zur franz. Veröffentlichung Nr. 1.202.536 Vorgetragene. Bei der GB-A-893,050 sind im Zusammenhang mit den gelösten Duroplasten bereits Zusätze erwähnt, die die Gleiteigenschaften verbessern sollen. Sie sind jedoch vorhanden in dem im Lösungsmittel gelösten Harz, ohne selbst gelöst zu sein, so daß der störungsfreie Auftrag der Lösung behindert wird. Bei den als Puder aufzutragenden Thermoplasten sind solche Zusätze nicht vorgesehen und es ist ausdrücklich auf die guten Gleiteigenschaften dieser Oberflächen hingewiesen.
Die Dicke der aufzutragenden Kunststoffschicht wird in Abhängigkeit von dem verwendeten Kunststoff mit 0,1 bis 5,0 mm angegeben. Sie wird weiter abhängig gemacht von den Abmessungen des Grubenstempels und dem Druck des verwendeten Druckmediums. Die Richtung der Abhängigkeit ist nicht erkennbar.

Eine ebensolcher Grubenstempel bzw. eine Kolben-Zyliner-Einheit ist bekannt geworden durch die DE-A-4015084. Dort soll die Beschichtung "in ausreichender Dicke" durch einen Pulbverlack oder Naßlack vorgenommen werden, der ausreichend erwärmt werden soll, um eine Vernetzung zu bewirken. Als ausreichend wird dort eine Schichtdicke von 200-250 µm angesehen. Eine Obergrenze ist nicht angegeben.
Naßauftrag und Pulverauftrag sind bereits aus den vorgenannten Schriften bekannt, so daß das hierzu bereits Erläuterte auch für die DE-A-4015084 gilt.

Der Erfindung liegt somit die Aufgabe zugrunde, ein Verfahren der eingangs beschriebenen Art vorzuschlagen, mit dem eine druckfeste Kunststoffbeschichtung von Zylinderflächen erreicht wird, die zudem den starken Reibungsverschleiß der auf der Kunststoffbeschichtung gleitenden, nichtmetallischen Dichtelemente vermeidet und die einen Betrieb mit Wasser ohne Schmierzusätze erlaubt. Eine kalibrierende Nachbearbeitung zur Fertigstellung soll außerdem ebenso wie eine erhöhte Umweltbelastung bzw. erhöhter Aufwand bei der Vermeidung erhöhter Umweltbelastungen vermieden werden.

Die der Erfindung zugrundeliegende Aufgabe ist, ausgehend von einem Verfahren der eingangs beschriebenen Art, dadurch gelöst, daß als Kunststoff ein dreidimensional vernetzender Duroplaststaub oder -pulver in einer Schichtdicke von bis zu 500 µm, vorzugsweise 250 µm, enthaltend weitere Komponenten, von denen mindestens eine als mitvernetzende oder nicht mitvernetzende Komponente zur Verbesserung der Trockenschmiereigenschaften beigegeben ist, aufgetragen und mindestens das Duroplast anschließend durch Erwärmung vernetzt wird. Zur Verbesserung der Trockenschmiereigenschaften können z.B. nicht mitvernetzendes Graphit u./o. Molybdändisulfit oder ähnlich wirkende Stoffe beigegeben werden. Dreidimensional vernetzte Duroplaste sind wesentlich weniger elastisch als die üblicherweise verwendeten Thermoplaste. Der Druck eines Strömungsmittels im Zylinderraum mit in dieser Weise dünn beschichteten Zylinderwänden kann nun nicht mehr eine starke elastische Verformung des Beschichtungsmaterials bewirken. Eine im Stand der Technik vom Druck des Strömungsmittels verursachte elastische Verformung der Beschichtung sorgt dafür, daß mit der axialen Bewegung des Kolbens der Kolben-Zylinder-Einheit eine Welle des Beschichtungsmaterials axial hin und her läuft und damit die Beschichtung allein aufgrund dieser Walkarbeit ablöst. Die geringere elastische Verformbarkeit des dünn aufgetragenen dreidimensional vernetzten Duroplastes verhindert dies. Darüberhinaus können auch Duroplaste z.B. als Stäube in geeigneter Mischung und mit Zusätzen von Additiven unterschiedlichster Art aufgebracht und anschließend durch Erwärmung sehr weitgehend dreidimensional vernetzt werden. Hierdurch wird erreicht, daß die Beschichtung nicht nach Art einer Kunstsstoffdecke über die Rauhigkeitsspitzen der metallischen Oberfläche gelegt wird, sondern daß der Kunststoff vielmehr in alle Rauhigkeitstäler eindringt und in dieser Lage dreidimensional vernetzt wird, so daß anschließend nicht mehr eine Kunststoffdecke über die Werkstoffrauhigkeiten der Oberfläche liegt, sondern daß vielmehr der Kunststoff in alle Rauhigkeitstäler eingedrungen ist und dort auch aufgrund der dreidimensionalen Vernetzung nach der Vernetzung verbleibt. Es entstehen durch die Vernetzung dreidimensional strukturierte Makromoleküle. Hierdurch wird weiter dafür gesorgt, daß der Innendruck der Kolben-Zylinder-Einheit den Kunststoff der Kunststoffbeschichtung nicht in die Rauhigkeitstäler der Oberflächenrauhigkeit des Werkstoffs der Kolbenzylindereinheit hineinpressen kann, weil diese Rauhigkeitstäler bereits ausgefüllt sind, so daß eine weitere Walkarbeit, wie sie nach dem bisherigen Stand der Technik erzwungen wurde, vermieden wird. Darüberhinaus wird auch verhindert, daß in solchen nach dem bisherigen Stand der Technik nicht ausgefüllten Rauhigkeitstälern verbliebene Gasreste durch die elastische Verformung der bisher bekannten Kunststoffbeschichtung aus ihrer Ruhelage herausgepreßt und zwischen metallischer Oberfläche und der dieser gegenüberliegenden Kunststoffoberfläche wandern und damit die Kunststoffoberfläche zusätzlich ablösen. Auch ein Hindurchdiffundieren schädlicher Mengen von Wasserdampf oder Sauerstoff wird durch das dreidimensional vernetzte Duroplast trotz des dünnen Auftrags verhindert. Damit wird auch der Betrieb mit Wasser möglich, weil eine Diffusion von schädlichen Mengen von Wasserdampf oder Sauerstoff nicht mehr befürchtet werden muß. Die gleichzeitig mit eingebrachten Additive zur Verbesserung der Schmiereigenschaften der Oberfläche des dreidimensional vernetzten Duroplastes bewirken, daß die nichtmetallischen Dichtelemente eines Kolbens einer solchen Kolben-Zylinder-Einheit mit nur sehr geringem Abrieb und sehr geringem Reibungskoeffizient auf der inneren Oberfläche des dreidimensionalen Duroplastes gleiten. Reibungswiderstand und Abrieb sind damit sehr gering. Gleichzeitig wird hierdurch auch eine gegenüber dem bekannten Stand der Technik außerordentlich geringe Hysterese erreicht. Irgendwelche Schmiermittelzusätze sind bei einem Betrieb mit Wasser nicht erforderlich. Aufgrund des dünnen Auftrags des Duroplastes ist eine kalibrierende Nacharbeit bei der Herstellung nicht erforderlich. Die Verwendung von Lösungsmitteln für die Lösung des Duroplastes im Lösungsmittel und die damit verbundenen Umweltbelastungen sind vollständig vermieden und es ist dennoch trotz der Additive ein störungsfreier Auftrag möglich.

Dreidimensional vernetzte Duroplaste haben bei den gen. Kolben-Zylinder-Einheiten außerdem den Vorteil, daß die mit dem Duroplast beschichtete Innenfläche des Zylinders durchaus z.B. durch Honen bei auftretender Riefenbildung oder auftretendem Verschleiß nachgearbeitet werden kann, ohne daß befürchtet werden muß, daß sich die Kunststoffbeschichtung von der metallischen Zylinderinnenwand löst.

Solche Duroplaste werden in der Form von Pulver aufgetragen. Ein solches Pulver ist leicht aufzutragen und zu vernetzen und bildet hierbei eine dreidimensionale, also räumlich strukturierte Vernetzung, so daß sich nicht etwa eine Kunststoffschicht über die Rauhigkeitsspitzen der metallischen Oberfläche legt nach Art einer Decke, sondern es werden vielmehr sämtliche Hohlräume der Rauhigkeiten mit Kunststoff ausgefüllt, der nach dem Auftrag dreidimensional und damit räumlich strukturiert vernetzt, so daß keinerlei Hohlräume im Bereich der Rauhigkeit mehr verbleiben. Dem Duroplastpulver kann darüberhinaus sehr einfach ein Additiv beigemegnt werden, mit dem die Gleiteigenschaften der Oberfläche des Duroplastes verbessert werden. Solche Additive sind z.B., wie oben erwähnt, Graphit u./o. Molbdändisulfit oder ähnlich wirkende Stoffe.

Wird das Duroplast in einer Dicke bis zu max. 500µm aufgetragen, dann können Verletzungen der Oberfläche bspw. durch Riefenbildung problemlos repariert werden, da innerhalb der Schichtdicke des Duroplastes der Zylinder sehr schnell und kostengünstig ausgeschliffen werden kann. Ein zu dicker Auftrag muß jedoch vermieden werden, weil sonst die Elastizität senkrecht zur Oberfläche zu groß wird, so daß es unter Druck zu einer Wellenbildung und zu Undichtigkeiten kommt. Eine bevorzugte Schichtdicke ist 150 bis 250 µm. Eine Schichtdicke von ca 500 µm sollte nicht überschritten werden. Die Beschichtung mit dem Duroplast bildet gleichzeitig einen zuverlässigen Schutz gegen aggressive Medien. Da gleichzeitig die Beschichtung mit dem Duroplast keine galvanische Behandlung darstellt, kann sie auch mit gleichem Erfolg bei hochfesten Stählen angewendet werden, ohne Gefahr einer Wasserstoffversprödung, wie sie bei einer galvanischen Beschichtung solcher hochfesten Stähle auftritt.

Um die Vernetzung in Gang zu bringen, ist es möglich bspw. das Zylinderrohr auf eine für die Vernetzung geeignete Temperatur (z.B. ca. 200°C) vor oder nach der Beschichtung anzuwärmen und nach Möglichkeit auf dieser Temperatur zu halten. Eine Beschichtung mit Pulver als solche ist bekannt, so daß darauf hier nicht näher eingegangen werden muß.

Zur Herstellung einer Kolben-Zylinder-Einheit kann z.B. ein Zylinderrohr, das als Halbzeug geliefert wird, einfach auf die notwendige Länge abgelängt und entgratet und anschließend beschichtet werden.

Eine Vorbehandlung, insbesondere eine zerspanende Vorbehandlung der zu beschichtenden Oberfläche des Rohres ist in der Regel nicht erforderlich.

Allenfalls kann es in bestimmen Fällen empfehlenswert sein, sicherzustellen, daß die zu beschichtenden Oberflächen fettfrei und zunderfrei sind. Hierzu genügt ein einfaches Eintauchen in ein Lösungsmittel oder aber eine Behandlung durch Sandstrahlen oder Bürsten. Sandstrahlen oder Bürsten haben zudem den Vorteil, daß hierdurch die behandelte Oberfläche hochaktiviert wird und dadurch besonders gut für eine Beschichtung vorbereitet ist.

Es ist damit auch möglich, als Rohr ein kaltgezogenes Rohr aus hochfestem Stahl zu verwenden. Auch hier kann die Beschichtung mit dem Duroplast ohne Vorbehandlung der Rohroberflächen erfolgen, so daß bei solchen Rohren eine galvanische Behandlung zur Beschichtung, die zu einer Wasserstoffversprödung führen würde, vermieden werden kann. Damit werden solche kaltgezogenen Rohre aus hochfestem Stahl erstmals auch einsetzbar und anwendbar für die Herstellung von Zylinderrohren von hydraulisch betätigten Grubenstempeln. Diese Grubenstempel mußten bisher, da die bekannte Kunststoffbeschichtung sich nicht bewährt hatte, einen galvanisch erzeugten Korrosionsschutz aufweisen bei einem Betrieb mit Wasser. Hierzu aber konnten wegen der Wasserstoffversprödung hochfeste Materialien nicht verwendet werden, so daß die an sich schon schweren Grubenstempel noch schwerer wurden, da das weniger feste Material dickere Wandstärken erforderte.

Ganz allgemein können alle zylindrischen Oberflächen von Kolben-Zylinder-Einheiten, auf denen Dichtringe oder sonstige Dichtelemente gleitend geführt sind, mit einem dreidimensional vernetzenden Duroplast beschichtet werden.

Auch Kolbenstangen können auf ihrer Außenseite entsprechend beschichtet sein. Eine ausreichende Dicke ist z.B. eine Schichtdicke von 150-250 µm.

Damit die notwendige Vernetzung schnell erfolgt, müssen mindestens die beschichteten Teile ausreichend hoch erwärmt werden. Dies kann eine Temperatur von 200°C -300°C sein. Die Temperatur ist abhängig von der Zusammensetzung des Pulvers. Vorzugsweise erfolgt die Erwärmung induktiv. Dies kann sehr schnell erfolgen und es ist die Temperatur gut zu bestimmen.

Nach dem erfindungsgemäßen Verfahren kann ganz besonders vorteilhaft ein Grubenstempel hergestellt werden mit mindestens einem äußeren und einem darin geführten inneren Zylinderrohr, wobei an der Innenfläche des äußeren Zylinderrohres Kolbendichtungen eines mit dem inneren Ende des inneren Zylinderrohres verbundenen Kolbens gleitend geführt sind, während an der Außenfläche des inneren, verschieblichen Zylinderrohres mindestens eine Dichtung anliegt, die über einen Bundring mit dem oberen Ende des äußeren Zylinderrohres verbunden ist, wobei an der Innenfläche des äußeren Zylinderrohres Kolbendichtungen eines mit dem inneren Ende des inneren Zylinderrohres verbundenen Kolbens gleitend geführt sind, während an der Außenfläche des inneren, verschieblichen Zylinderrohres mindestens eine Dichtung anliegt, die über einen Bundring mit dem oberen Ende des äußeren Zylinderrohres verbunden ist, wobei mindestens die innere zylindrische Oberfläche des äußeren Zylinderrohres und die äußere zylindrische Oberfläche des inneren Zylinderrohres gebildet sind von einem Kunststoff. Ein solcher Grubenstempel zeichnet sich dadurch aus, daß als Kunststoff ein in einer Dicke bis 500 µm, vorzugsweise bis 250 µm, aufgetragenes und dreidimensional vernetztes Duroplast verwendet ist, das weitere mitvernetzende oder nicht mitvernetzende Komponenten enthält, von denen mindestens eine die Trockenschmiereigenschaften verbessert.

Der besondere Vorteil liegt hier darin, daß aufgrund der funktionsfähigen Beschichtung mit einem Duroplast inneres und äußeres Zylinderrohr aus kaltgezogenem, hochfestem Stahl hergestellt werden kann, das nach der Ablängung und vor der Beschichtung nicht mehr zerspanend bearbeitet wurde. Ein solcherart gestalteter Grubenstempel kann mit einfachem Wasser, aber auch beispielsweise mit Salzwasser oder sonstige gelöste Mineralien enthaltendem Wasser problemlos betrieben werden, da es wegen der Additive keine Reibungsprobleme mehr gibt. Gleichzeitig kann durch die Möglichkeit des Betriebes mit klarem Wasser auch auf die vielfach aus Korrosionsgründen eingesetzte Emulsion, die schwer umweltbelastend ist, verzichtet werden. Emulsion wurde häufig bei solchen Grubenstempeln verwendet, deren Zylinderoberflächen nicht galvanisch behandelt werden konnten, weil die Zylinderrohre mit Kopfstücken und Bodenstücken verschweißt werden mußten. Die Verschweißung hätte die galvanische Beschichtung zerstört. Bei solchen Zylindern konnten bisher nur die entsprechenden Oberflächen fein bearbeitet werden und durch Verwendung einer Emulsion vor Korrosion geschützt werden. Neuere Konstruktionen von hydraulisch betätigten Grubenstempeln jedoch (DE-G 88 08 519) benötigen eine solche Verschweißung nicht mehr. Der Zusammenbau kann kalt erfolgen. Hierdurch können einerseits hochfeste Stähle verwendet werden, da ja eine Beeinflussung der Materialstruktur durch die Schweißwärme nicht mehr erfolgt, und es kann andererseits auf eine Bearbeitung der entsprechenden zylindrischen Flächen der zugehörigen Zylinderrohre vollständig verzichtet werden. Allenfalls kommt eine Entfettung und Entzunderung in Frage. Es ist hierbei sehr gut die Beschichtung mit einem Duroplast vor der Montage eines solchen Grubenstempels möglich, da ja eine nachfolgende Wärmebehandlung z.B. durch Schweißen und damit eine Zerstörung der Beschichtung nicht mehr auftritt. Der Wegfall der galvanischen Beschichtung und der gleichzeitige Wegfall der Schweißung macht erst den Einsatz hochfester Stähle und damit den Bau leichter Grubenstempel möglich. Der Wegfall der galvanischen Beschichtung verhindert die Wasserstoffversprödung hochfester Stähle. Hochfeste Stähle aber sind nicht oder nur außerordentlich schwierig schweißbar. Im Stand der Technik sind aber Grubenstempelkonstruktionen, die nicht geschweißt werden müssen, bekannt. Eine Beschichtung solcher hochfesten Stähle in bekannter Weise würde, wie eingangs dargelegt, nicht zum gewünschten Ergebnis führen.

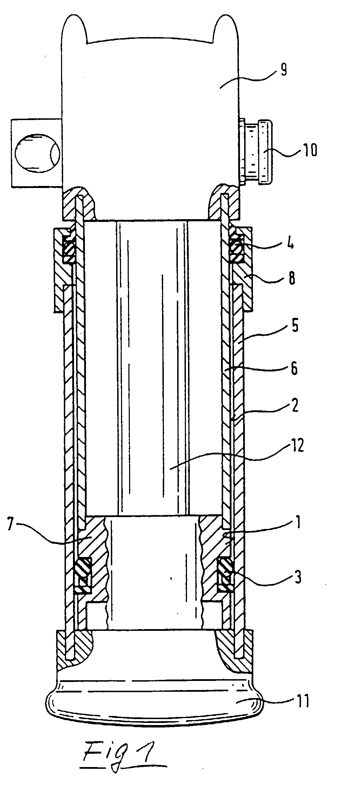

Ein in Figur 1 Zeichnung dargestellter Grubenstempel besteht im wesentlichen aus einem Kopfteil 9 mit eingebautem Setz- und Raubventil 10 und einem Fußteil 11, wobei das Fußteil 11 ein äußeres Zylinderrohr 5 und das Kopfteil 9 ein inneres Zylinderrohr 6 trägt. Die Zylinderrohre 5 und 6 sind in entsprechende Nuten des Kopfteils 9 bzw. Fußteil 11 eingesetzt und dort über einen geeigneten Kleber oder Kunststoff befestigt und abgedichtet. Diese Verbindungen sind bekannt und werden daher hier nicht mehr erläutert. Das äußere Zylinderrohr 5 weist an seinem oberen Ende einen Bundring 8 auf, der einen Dichtring 4 trägt, der gegen die äußere Zylinderfläche des inneren Zylinderrohres 6 anliegt und bei axialer Verschiebung dieses inneren Zylinderrohres 6, das wie eine Kolbenstange eines normalen hydraulischen Zylinders wirkt, auf dieser Oberfläche entlang gleitet. Das zweite Ende des inneren Zylinderrohres 6 weist einen Kolben 7 auf, der ebenfalls mit einem Dichtring 3 versehen ist, wobei dieser Dichtring 3 an der inneren Zylinderfläche des äußeren Zylinderrohres 5 anliegt und auf dieser Fläche dichtend gleitet. Zwischen Kopfstück 9 und Kolben 7 ist im Ausführungsbeispiel noch ein Rohr 12 vorgesehen, das als Verbindungsleitung für Druckwasser dient. Das Druckwasser wird hierbei über das Setz- und Raubventil 10 durch das Rohr 12 und durch den Kolben 7 hindurch vor die untere Stirnseite des Kolbens geführt.

Die Dichtringe 3 und 4 gleiten hierbei nicht mehr auf der inneren zylindrischen Fläche der Rohre 5 und 6. Die Rohre 5 und 6 können aus hochfestem Stahl kalt gezogen sein. Die hierdurch entstehende Oberfläche ist nicht geeignet, um mit Dichtringen 3 bzw. 4 zusammenzuarbeiten. Um eine möglichst billige und dennoch sehr haltbare und reparaturfreundliche sowie widerstandsfähige Oberfläche zu erhalten, wurde daher die äußere zylindrische Fläche des inneren Rohres 6 sowie die innere zylindrische Fläche des äußeren Rohres 5 nach dem erfindungsgemäßen Verfahren mit einem dreidimensional vernetzenden Duroplast beschichtet, wobei die Schichtdicke so gewählt wurde, daß einerseits ausgehend vom Rohmaß des fertigen Rohres das notwendige Fertigmaß für die Dichtringe 3 und 4 und andererseits eine ausreichende Schichtdicke für Reparaturen erzielt wurde. Hierdurch wird die zylindrische Oberfläche 1, auf der der Dichtring 3 des Kolbens 7 gleitet, sowie die zylindrische Oberfläche 2, auf der der im Bundring 8 angeordnete Dichtring 4 gleitet, nicht mehr von der Oberfläche der zugehörigen zylindrischen Rohre 5 und 6, sondern vielmehr von der Oberfläche der beschriebenen Beschichtung gebildet. Die Beschichtung ist andererseits so dünn gehalten, daß die Elastizität in Richtung senkrecht zu ihrer Oberfläche so gering ist, daß bei Druckbeaufschlagung keine Undichtigkeit entsteht. Bei einem solcherart ausgebildeten Grubenstempel kann auf die Verwendung von Emulsion völlig verzichtet werden. Er kann mit einfachem Wasser betrieben werden, so daß die Kosten für den Ölzusatz und für die Entsorgung des Ölzusatzes eingespart werden. Gleichzeitig wurden eingespart die Kosten für eine aufwendige Oberflächenbearbeitung der Zylinderrohre, um sie einerseits in geeigneter Qualität für die Gleitdichtungen herzustellen und andererseits ggfls. korrosionsbeständig zu machen. Die genannte Beschichtung ist auch korrosionsbeständig beispielsweise gegen Salzwasser oder sonstige in Wasser gelöste Mineralien. Eine solche Duroplastbeschichtung ergibt weiterhin durch geeignete und bekannte Additive gleichzeitig ausgezeichnete Trockenschmiereigenschaften. Soweit das angewendete Duroplast für den jeweiligen Anwendungsfall ausreichende Gleiteigenschaften aufweist, kann auf die die Gleiteigenschaften verbesserenden Additive verzichtet werden. Darüber hinaus hat diese Beschichtung günstige Elastizitätseigenschaften, so daß eine Zerstörung oder Verletzung der Beschichtung auch bei elastischen Verformungen des Stempels unter Last nicht zu befürchten ist. Es ist problemlos möglich, eine ausreichend große Schichtstärke aufzubringen, um hierdurch einerseits eine zerspanende Rohrbearbeitung zu vermeiden und andererseits Nacharbeitungsmöglichkeiten beim Auftreten von Verschleißerscheinungen zu haben. Demnach kann die Schichtstärke mit 150 bis 500 µm genügend dünn gehalten werden, um eine zu große Elastizität senkrecht zu ihrer Oberfläche zu vermeiden. Eine galvanische Behandlung und damit die Gefahr einer Wasserstoffversprödung bei Verwendung von hochfesten Materialien ist vollständig entfallen. Da die entstehenden Oberflächen der Beschichtung glatt sind und aufgrund der Additive außerordentlich günstig mit den marktüblichen Dichtungen zusammenarbeiten, wird gleichzeitig auch eine außerordentlich hohe Abriebbeständigkeit erreicht.

## Patentansprüche

1. Verfahren zur Herstellung einer Kolben-Zylinder-Einheit, mit mindestens einer Zylinderinnenfläche und mindestens einem in der Zylinderinnenfläche gleitend geführten Kolben, wobei an mindestens einer zylindrischen Oberfläche ein Dichtring angelegt wird und Dichtring und Oberfläche relativ zueinander verschiebbar angeordnet werden und wobei die Enden jeder Zylinderinnenfläche mit mechanischen Mitteln abgedichtet werden, wobei mindestens die zylindrischen Oberflächen (1,2), gegen die ein Dichtring (3,4) angelegt wird, nach einer groben Vorbearbeitung mit Kunststoff beschichtet werden, der durch Erwärmung vernetzt wird, dadurch gekennzeichnet, daß als Kunststoff ein dreidimensional vernetzender Duroplaststaub oder -pulver in einer Schichtdicke von bis zu 500 µm, vorzugsweise 250 µm, enthaltend weitere Komponenten, von denen mindestens eine als mitvernetzende oder nicht mitvernetzende Komponente zur Verbesserung der Trockenschmiereigenschaften beigegeben ist, aufgetragen und mindestens das Duroplast anschließend durch Erwärmung vernetzt wird.

2. Verfahren nach Anspruch 1, dadurch gekennzeichnet, daß die zylindrischen Oberflächen (1,2) an Rohren (5,6) ausgebildet sind, wobei die zu beschichtenden zylindrischen Oberflächen (1,2) nach der Rohrherstellung ohne vorherige zerspanende Bearbeitung beschichtet werden.

3. Verfahren nach Anspruch 2, dadurch gekennzeichnet, daß als Rohr (5,6) ein kaltgezogenes Rohr aus hochfestem Stahl verwendet wird.

4. Verfahren nach einem der Ansprüche 1 bis 3, dadurch gekennzeichnet, daß jede zu beschichtende zylindrische Oberfläche (1,2) vor der Beschichtung gesandstrahlt u./o. gebürstet wird.

5. Verfahren nach einem der Ansprüche 1 bis 4, dadurch gekennzeichnet, daß die Vernetzung durch ausreichende Erwärmung der beschichteten Teile vor der Beschichtung durchgeführt wird.

6. Verfahren nach einem der Ansprüche 1 bis 4, dadurch gekennzeichnet, daß zur Vernetzung die beschichteten Teile zusammen mit der Beschichtung ausreichend erwärmt werden.

7. Verfahren nach einem der Ansprüche 1 bis 6, dadurch gekennzeichnet, daß die Erwärmung induktiv erfolgt.

8. Kolben-Zylinder-Einheit mit mindestens einer eine zylindrische Oberfläche (1) bildenden Zylinderinnenfläche und mindestens einem in der Zylinderinnenfläche gleitend geführten Kolben (7), wobei an mindestens einer zylindrischen Oberfläche (1,2) ein Dichtring (3,4) gleitend geführt ist und wobei die Enden jeder Zylinderinnenfläche mit mechanischen Mitteln abgedichtet sind und mindestens die zylindrischen Oberflächen (1,2), gegen die ein Dichtring (3,4) angelegt und gleitend geführt ist, mit Kunststoff beschichtet ist, der durch Vernetzung Makromoleküle gebildet hat, dadurch gekennzeichnet, daß als Kunststoff ein dreidimensional vernetzender Duroplaststaub oder - pulver in einer Dicke von bis 500 µm, vorzugsweise 250 µm, enthaltend weitere Komponenten, von denen mindestens eine als mitvernetzende oder nicht mitvernetzende Komponente zur Verbesserung der Trockenschmiereigenschaften beigegeben ist, aufgetragen ist, wobei mindestens das Duroplast durch Vernetzung unter Erwärmung dreidimensional vernetzte Makromoleküle gebildet hat.

9. Einheit nach Anspruch 8, dadurch gekennzeichnet, daß mindestens eine beschichtete zylindrische Oberfläche (1,2) an einem kaltgezogenen Rohr aus hochfestem Stahl ausgebildet ist.

10. Als Kolben-Zylinder-Einheit ausgebildeter Grubenstempel mit mindestens einem äußeren und einem darin verschieblich geführten inneren Zylinderrohr, wobei an der Innenfläche des äußeren Zylinderrohres (5) Kolbendichtungen (34) eines mit dem inneren Ende des inneren Zylinderrohres (6) verbundenen Kolbens (7) gleitend geführt sind, während an der Außenfläche des inneren, verschieblichen Zylinderrohres (6) mindestens eine Dichtung (4) anliegt, die über einen Bundring (8) mit dem oberen Ende des äußeren Zylinderrohres (5) verbunden ist, wobei mindestens die innere zylindrische Oberfläche (1) des äußeren Zylinderrohres (5) und die äußere zylindrische Oberfläche (2) des inneren Zylinderrohres (6) gebildet sind von einem Kunststoff, dadurch gekennzeichnet, daß als Kunststoff ein in einer Dicke bis 500 µm, vorzugsweise bis 250 µm, aufgetragenes und dreidimensional vernetztes Duroplast verwendet ist, das weitere mitvernetzende oder nicht mitvernetzende Komponenten enthält, von dem mindestens eine die Trockenschmiereigenschaften verbessert.

11. Grubenstempel nach Anspruch 10, dadurch gekennzeichnet, daß inneres und äußeres Zylinderrohr (5,6) aus kaltgezogenem hochfestem Stahl besteht, der nach der Ablängung und vor der Beschichtung nicht mehr zerspanend bearbeitet wurde.

## Claims

1. A method of producing a piston-cylinder unit with at least one cylinder inner surface and at least one piston guided to slide in the cylinder inner surface, whereby a gasket is fitted on at least one cylindrical surface, gasket and surface being disposed to be displaceable relatively to each other, and whereby the ends of each cylinder inner surface are sealed by mechanical means whereby at least the cylindrical surfaces (1, 2), against which a gasket (3, 4) is fitted, are, after being roughly prepared, coated with a synthetic plastics material which is cross-linked by being heated, characterised in that, as the synthetic plastic material, a three-dimensionally cross-linking duroplast dust or powder, in a layer thickness of up to 500 µm and preferably 250 µm, containing further components of which at least one is added as a jointly cross-linking or non-jointly cross-linking component in order to enhance the dry lubrication properties, is applied after which at least the duroplast is then cross-linked by being heated.

2. A method according to claim 1, characterised in that the cylindrical surfaces (1, 2) are constructed on tubes (5, 6), the cylindrical surfaces (1, 2) which are to be coated being coated after production of the tubes and without prior machining by a cutting process.

3. A method according to claim 2, characterised in that a cold-drawn tube of high-strength steel is used as the tube (5, 6).

4. A method according to one of claims 1 to 3, characterised in that each cylindrical surface (1, 2) which is to be coated is sand blasted and/or brushed prior to being coated.

5. A method according to one of claims 1 to 4, characterised in that the cross-linking is carried out by adequate heating of the coated parts prior to coating.

6. A method according to one of claims 1 to 4, characterised in that for cross-linking the coated surfaces are sufficiently heated together with the coating.

7. A method according to one of claims 1 to 6, characterised in that the heating is carried out inductively.

8. A piston-cylinder unit with at least one cylinder inner surface forming a cylindrical surface (1) and at least one piston (7) guided to slide in the cylinder inner surface whereby on at least one cylindrical surface (1, 2) a gasket (3, 4) is slidingly guided and whereby the ends of each cylinder inner surface are sealed by mechanical means and at least the cylindrical surfaces (1, 2) against which a gasket (3, 4) is fitted and sliding guided, is coated with a synthetic plastics material which by being cross-linked has formed macromolecules, characterised in that the synthetic plastics material used is a three-dimensionally cross-linking duroplast dust or powder in a thickness of up to 500 µm and preferably 250 µm, containing further components of which at least one is added as a jointly cross-linking or non-jointly cross-linking component in order to enhance the dry lubrication properties, is applied, whereby at least the duroplast has formed three-dimensionally cross-linked macromolecules by being cross-linked under heat.

9. A unit according to claim 8, characterised in that at least one coated cylindrical surface (1, 2) on a cold-drawn tube is constructed from high-strength steel.

10. A pit prop constructed as a piston-cylinder unit with at least one outer cylindrical tube and, guided for displacement therein, an inner cylindrical tube whereby on the inner surface of the outer cylindrical tube (5), piston seals (34) of a piston (7) connected to the inner end of the inner cylindrical tube (6) are slidingly guided while on the outer surface of the inner displaceable cylindrical tube (6) there is at least one seal (4) which is connected to the upper end of the outer cylindrical tube (5) by a collar ring (8) whereby at least the inner cylindrical surface (1) of the outer cylindrical tube (5) and the outer cylindrical surface (2) of the inner cylindrical tube (6) are formed by a synthetic plastics material, characterised in that the synthetic plastics material used is a three-dimensionally cross-linked duroplast which is applied in a thickness of up to 500 µm and preferably up to 250 µm and which contains further jointly cross-linking or non-jointly cross-linking components of which at least one improves the dry lubrication properties.

11. A pit prop according to claim 10, characterised in that inner and outer cylindrical tubes (5, 6) consist of cold-drawn high-strength steel which, after being cut to length and prior to being coated, is no longer subjected to a cutting process.

## Revendications

1. Procédé pour la fabrication d'une unité piston-cylindre comportant au moins une surface intérieure cylindrique et au moins un piston coulissant dans la surface intérieure cylindrique, étant précisé qu'une bague d'étanchéité est appliquée contre au moins une surface cylindrique, que la bague d'étanchéité et la surface sont disposées pour pouvoir coulisser l'une par rapport à l'autre, que les extrémités de chaque surface intérieure cylindrique sont rendues étanches grâce à des moyens mécaniques et qu'au moins les surfaces cylindriques (1, 2) contre lesquelles une bague d'étanchéité (3, 4) est appliquée sont revêtues, après un pré-usinage grossier, d'une matière plastique qui est réticulée grâce à un réchauffement, caractérisé en ce qu'on applique comme matière plastique une matière thermodurcissable en poudre à réticulation tridimensionnelle d'une épaisseur de couche allant jusqu'à 500 µm, de préférence 250 µm, et contenant d'autres composants dont l'un au moins est ajouté comme composant participant ou non à la réticulation afin d'améliorer les caractéristiques de lubrification à sec, et au moins la matière thermodurcissable est ensuite réticulée grâce à un réchauffement.

2. Procédé selon la revendication 1, caractérisé en ce que les surfaces cylindriques (1, 2) sont formées sur des tubes (5, 6), les surfaces cylindriques à revêtir (1, 2) étant revêtues après la fabrication des tubes, sans usinage par enlèvement de copeaux préalable.

3. Procédé selon la revendication 2, caractérisé en ce qu'on utilise comme tube (5, 6) un tube fabriqué par étirage à froid en acier très résistant.

4. Procédé selon l'une des revendications 1 à 3, caractérisé en ce que chaque surface cylindrique à revêtir (1, 2) est auparavant décapée au sable et/ou brossée.

5. Procédé selon l'une des revendications 1 à 4, caractérisé en ce que la réticulation est réalisée avant l'application du revêtement grâce à un réchauffement suffisant des parties revêtues.

6. Procédé selon l'une des revendications 1 à 4, caractérisé en ce que pour la réticulation, on réchauffe suffisamment les parties revêtues ainsi que le revêtement.

7. Procédé selon l'une des revendications 1 à 6, caractérisé en ce que le réchauffement se fait par voie inductive.

8. Unité piston-cylindre comportant au moins une surface intérieure cylindrique formant une surface cylindrique (1), et au moins un piston (7) coulissant dans la surface intérieure cylindrique, étant précisé qu'une bague d'étanchéité (3, 4) coulisse sur au moins une surface cylindrique (1, 2), que les extrémités de chaque surface intérieure cylindrique sont rendues étanches grâce à des moyens mécaniques et qu'au moins les surfaces cylindriques (1, 2) contre lesquelles une bague d'étanchéité (3, 4) est appliquée et coulisse sont revêtues d'une matière plastique qui a formé, par réticulation, des macromolécules, caractérisée en ce qu'on applique comme matière plastique une matière thermodurcissable en poudre à réticulation tridimensionnelle d'une épaisseur de couche allant jusqu'à 500 µm, de préférence 250 µm, et contenant d'autres composants dont l'un au moins est ajouté comme composant participant ou non à la réticulation afin d'améliorer les caractéristiques de lubrification à sec, étant précisé qu'au moins la matière thermodurcissable a formé, grâce à une réticulation obtenue moyennant un réchauffement, des macromolécules à réticulation tridimensionnelle.

9. Unité selon la revendication 8, caractérisée en ce qu'au moins une surface cylindrique revêtue (1, 2) est formée sur un tube fabriqué par étirage à froid en acier très résistant.

10. Etançon conçu comme une unité piston-cylindre comportant au moins un tube cylindrique extérieur et un tube cylindrique intérieur coulissant dans celui-ci, étant précisé que des joints d'étanchéité (3, 4) d'un piston (7) relié à l'extrémité intérieure du tube cylindrique intérieur (6) coulissent sur la surface intérieure du tube cylindrique extérieur (5), tandis qu'il est prévu, appliqué contre la surface extérieure du tube cylindrique mobile intérieur (6), au moins un joint d'étanchéité (4) qui est relié à l'extrémité supérieure du tube cylindrique extérieur (5) par un collet (8), au moins la surface cylindrique intérieure (1) du tube cylindrique extérieur (5) et la surface cylindrique extérieure (2) du tube cylindrique intérieur (6) se composant d'une matière plastique, caractérisé en ce qu'on utilise comme matière plastique une matière thermodurcissable appliquée sur une épaisseur allant jusqu'à 500 µm, de préférence 250 µm, et à réticulation tridimensionnelle qui contient d'autres composants participant ou non à la réticulation, dont l'un au moins améliore les caractéristiques de lubrification à sec.

11. Etançon selon la revendication 10, caractérisé en ce que les tubes cylindriques intérieur et extérieur (5, 6) se composent d'un acier très résistant étiré à froid qui n'a plus été usiné par enlèvement de copeaux après la mise à longueur et avant l'application du revêtement.
